(19) Europäisches Patentamt
European Patent Office
Office européen des brevets

(11) Publication number: **0 174 801 B1**

# (12) EUROPEAN PATENT SPECIFICATION

(45) Date of publication of patent specification: **18.12.91**

(51) Int. Cl.5: **A23L 1/318**

(21) Application number: **85306291.7**

(22) Date of filing: **05.09.85**

The file contains technical information submitted after the application was filed and not included in this specification

## (54) Tenderizing of meat.

(30) Priority: **08.09.84 GB 8422791**

(43) Date of publication of application:
**19.03.86 Bulletin 86/12**

(45) Publication of the grant of the patent:
**18.12.91 Bulletin 91/51**

(84) Designated Contracting States:
**DE FR GB IT**

(56) References cited:
**DE-A- 2 506 033**
**DE-A- 2 713 201**
**FR-A- 1 492 515**
**GB-A- 883 151**
**US-A- 3 556 807**

**JOURNAL OF SCIENCE FOOD & AGRICULTURE, vol. 27, no. 12, 1976, pages 1079-1084; L. WENHAM et al.: "The effect of marinading on beef"**

**FOOD SCIENCE & TECHNOLOGY ABSTRACTS, no. 85-08-50140; N. GAULT et al.: "The influence of acetic acid concentration on the efficiency of marinading as a process for tenderizing beef", & PROCEEDINGS OF THE EUROPEAN MEETING OF MEAT RESEARCH WORKERS, no. 30, 4: 12, 184-185, 1984**

(73) Proprietor: **The Queen's University of Belfast**

**Belfast BT7 1NN, Northern Ireland(GB)**

(72) Inventor: **Gault, Norman Frederick Samuel**
**18 Onslow Gardens Bangor**
**County Down Northern Ireland(GB)**

(74) Representative: **Low, Peter John et al**
**WILSON, GUNN & ELLIS 41 Royal Exchange**
**Manchester, M2 7BD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

This invention relates to the tenderizing of meat and more particularly, but not exclusively tenderising of beef.

It is well known that the meat from younger animals is usually more tender than meat from older animals. It is thought that this is related to an increase, with animal age, in the proportion of heat-stable intermolecular cross-links in the collagen fibre matrix of muscle connective tissue, and that this contributes to meat toughness during cooking. This has lead to the widespread practice of slaughtering animals for human consumption when they are young and frequently before they are fully grown. For example beef animals are usually slaughtered at from eighteen months to two and a half years to ensure that the meat will be reasonably tender. Older animals are less acceptable as a source of meat for human consumption. It is also well known that meat with a high proportion of connective tissue is generally tougher on cooking than meat with a low proportion of connective tissue. Consequently even meat from young animals may be tough on cooking if the connective tissue content, and in particular, the collagen content, is relatively high.

Irrespective of the age of the animal from which the meat is obtained, or the anatomical location of the muscle from which the cut of meat is obtained, meat can be very tough after cooking if muscles have undergone the phenomenon known as "cold-shortening". This can occur when the temperature attained in the musculature of slaughtered animals falls below 14°C before the onset of rigor mortis. The tension developed due to this cold induced biochemical contraction is maintained as the muscles go into rigor mortis. The extent of cold shortening in muscle is associated with decreased tenderness on cooking, and meat which has been markedly cold-shortened due to rapid low temperature chilling in the immediate post-slaughter period will be extremely tough on cooking.

Attempts have been made in the past to improve the tenderness of meat. One traditional method is marinading which is a well recognised culinary technique involving immersing meat in a marinade usually based on wine to which spices and other constituents are added. The flavour of the meat is undoubtedly affected by marinading and it has also been supposed that the tenderness of the meat is also modified. However, investigations that have been made into the tenderizing effect of a vinegar marinade on beef joints have indicated no increase in tenderness (Griswold R.M.Fd.Res. 20, 160 and 171 [1955]). Later work using a marinade of acetic acid on thin strips of M.sternomandibularis muscle showed some increase in tenderness but little effect on steaks of M. longissimus dorsi, (Wenham L.M. and Locker R.H., J.Sci.Fd.Agric.27, 1079 [1976]). From these results it can be concluded that marinading will only tenderise meat rich in collagen so that it does not provide a method of tenderizing meat of all kinds and in particular meat having a low collagen content.

The pH of lean skeletal muscle in beef cattle before slaughter is about 7.0. After slaughtering the pH of the muscle drops, due to the production of lactic acid during post-mortem·glycolysis, to the range 5.9 to 5.4 under normal conditions. This is known as the ultimate pH. It has been suggested in the past that the tenderness of cooked meat could be improved if the pH of the meat could be maintained at a level above the normal ultimate pH, particularly between pH 5.9 and 7.0 It has also been suggested in the past that the toughening effects of "cold-shortening" can also be overcome by maintaining such high pH conditions in meat.

According to the invention there is provided a method of tenderising meat without the necessity of knowing the type of meat, comprising contacting the meat with a non-toxic acid without the inhibition of tenderisation by the addition of sodium chloride at least until the pH of the meat is reduced below the iso-electric point of the myofibrillar proteins and until the increase in weight of the meat represented by the ratio

$$\frac{\text{weight of treated lean meat}}{\text{weight of untreated lean meat}}$$

is above 1.10

In a preferred embodiment of the invention the acid is an organic acid such as acetic acid, citric acid, tartaric acid, succinic acid, malic acid, lactic acid, fumaric acid, adipic acid, nicotinic acid, ascorbic acid, propionic acid, benzoic acid or any combination thereof. inorganic acids such as o-phosphoric acid, hydrochloric acid and sulphuric acid may also be used. Mixtures of organic and inorganic acids can be used if desired. The meat is preferably immersed in the acid although other methods of impregnation of the meat may be employed, for example, the acid may be sprayed onto the meat or, the acid may be injected into the meat or, the meat may be cut to facilitate entry of the acid into the meat. The acid in which the meat is immersed is preferably agitated, or alternatively, the meat and the acid may be tumbled together mechanically. The temperature is also preferably controlled in the interests of good manufacturing practice. The temperature should not be so low as to cause freezing and not so high, that is to say above about 40 °C, as to cook the meat. Good results have been obtained when the temperature is maintained at or below ambient for example from freezing to 10 °C. The contact between acid and meat is continued for a time sufficient to permit impregnation of the acid substantially throughout the meat and to lower the pH below the ultimate pH and below the iso-electric point of the myofibrillar proteins, preferably to below pH 5.0 and more preferably below pH 4.8. It will be realised that the duration of contact of meat and acid is dependent inter alia on the kind and size of meat being treated. Some cuts of meat are more readily impregnated. In addition the smaller the meat pieces the less time will be required. It will be realised that the duration of contact of meat and acid is also dependent inter alia on the kind, type, strength and volume of acid or combination of acids being used.

The concentration of the acid or mixture of acids is not important save that it must be such as to reduce the pH of the meat. The following Table A sets out by way of example, the amounts of various acid (in mg equivalents/g fresh lean meat) that is necessary to reduce the pH of lean beef from pH 6.0 to pH 5.0, pH 4.0 and pH 3.0.

TABLE A

| Acid | pH 5.00 | pH 4.00 | pH 3.00 |
|---|---|---|---|
| Acetic | 3.6 | 48 | 720 |
| Citric | 4.2 | 28 | 120 |
| Malic | 3.4 | 20 | 114 |
| Lactic | 3.6 | 18 | 135 |
| Tartaric | 3.0 | 15 | 71 |
| Succinic | 4.1 | 30 | 470 |
| Hydrochloric | 1.6 | 5.2 | 12 |

It has been found, in connection with the present invention, that there is a relationship between the extent of tenderizing of the meat and the increased water holding capacity of the meat which is evidenced by swelling or weight increase of the meat being treated in situations where the volume of acid used is at least sufficient to enable the meat to reach its maximum swelling capacity. By measuring the increase in weight of the meat being treated under these conditions one can determine whether the meat is sufficiently impregnated with acid to achieve adequate tenderization. An increase in weight of from 1.10 to 2.00 (measured as

$$\frac{\text{weight of treated lean meat)}}{\text{weight of untreated lean meat)}}$$

indicates a preferred degree of tenderizing.

It has also been found, in connection with the present invention, that there is a relationship between the extent of tenderizing of the meat and, in conditions where swelling occurred, the swelling or weight increase of the treated meat as measured after cooking or other form of heat treatment. Such a relationship is possibly because of the discovery that the increase in the weight of the meat treated in accordance with the invention is substantially retained during cooking or other form of heat treatment.

By measuring the increase in weight of the meat being treated under these conditions, after cooking or heat processing, one can also determine whether the meat is sufficiently impregnated with acid to achieve adequate tenderization. A retention of weight from 0.65 to 1.85 (measured as

$$\frac{\text{weight of treated cooked lean meat}}{\text{weight of uncooked untreated lean meat}})$$

indicates a useful degree of tenderizing.

Another interesting discovery arising from the present invention is that there is a relationship between the extent of tenderizing of the meat and the pH attained within the meat being treated. By measuring the pH of the meat after treatment and preferably before cooking or heat processing, one can tell whether the meat is sufficiently impregnated with acid to achieve adequate tenderization.

It seems that the pH of the meat influences the extent to which the meat swells, which itself, as previously explained is related to the tenderness of the cooked meat. It also seems that the pH of the meat influences the extent to which the meat shrinks on cooking, tenderness being associated with limited shrinkage. As the pH of the meat is lowered from the normal ultimate pH and more particularly below the iso-electric point of the myofibrillar proteins due to impregnation by acid there is in situations where the volume of acid used is at least sufficient to enable the meat to reach its maximum swelling capacity, very little swelling until the pH reaches about 4.8 to 4.6. Below that value there is a marked increase in swelling to a maximum achieved around 3.4 to 3.2. (It is not possible to fix a precise pH for the maximum swelling since this will vary slightly with different kinds of meat and even as between different cuts of meat from the same animal and even as between different acids or combinations thereof). When the meat is cooked there is some loss of weight but this loss gradually diminishes as the pH drops below about 4.3. Examination of the peak shear force values of the meat showed them to be at their highest below the ultimate pH and down to about pH 4.8. In other words meat in that pH range is very tough. In the pH range 4.8 to 4.1 the peak shear force values dropped sharply indicating a marked increase in tenderness of the cooked meat. With further lowering of the pH the rate of increase of tenderness of the cooked meat decreased, the maximum tenderness being at a pH of about 3.3. Considerable tenderizing effects can be obtained at about 50% of maximum swelling of the meat in situations where the volume of acid used is at least sufficient to enable the meat to reach its maximum swelling capacity. Moreover the relationships between peak shear force and the swelling ratios of both raw meat and cooked meat under such conditions where swelling is not limited can be quantified. Such results confirm that statistically significant mathematical relationships exist between cooked meat toughness and the swelling ratios of both raw meat and cooked meat.

It is to be understood that the tenderizing effect of the invention is obtained on the lean or skeletal muscular tissue of meat and references to tenderizing of meat throughout the specification must be construed with that in mind. The invention can be used to tenderize all kinds of raw, freeze dried, or thawed meat derived from the musculature of any animal including poultry and fish. If desired the degree of tenderizing can be controlled by the inclusion of additives such as alkali metal or akaline earth metal salts to the acid solution. The following Example further illustrates the invention.

EXAMPLE I

M.longissimus lumborum muscles from four young steers were obtained commercially three days after slaughter. These were cut transversely on a gravity feed slicer into steaks approximately 1.0 cm thick, from which discs of meat 3.0 cm in diameter (weight 7.5±1.0 g) were prepared using a cork borer. To facilitate slicing and coring, transverse blocks of muscle and steaks were tempered individually at -25°C until the surfaces were rigid.

Acetic acid solutions of the following strengths were used as marinades: 0.01N, 0.025N, 0.05N, 0.075N, 0.10N, 0.25N, 0.50N, 0.75N, 1.00N, 1.25N, 1.50N, 2.00N, and 3.00 N. Each meat disc was accurately weighed and placed in a 200 ml capacity screw-cap polystyrene jar to which 50 ml chilled (4°C) acetic acid solution was added. Marinading was continued for 48 hours at 4°C with continuous swirling at 120 rpm in a Gallenkamp Cooled Orbital Incubator. Untreated meat discs stored under the same conditions were used as controls. Each treatment was replicated four times for each animal.

After marinading, meat discs were reweighed after surface drying with paper towelling. Two discs from each treatment were individually cooked in sealed polythene bags in a water bath at 80°C for 20 min and immediately chilled in an ice-water bath. They were then surface dried as before and reweighed. The weight of each marinaded meat disc, before and after cooking, was divided by the corresponding raw meat weight to express change in weight as a swelling ratio. Cores of meat 0.9 cm in diameter were cut from each meat disc parallel to the muscle fibre direction (where possible) for tenderness assessment on an Instron Model 1122 Universal Testing Instrument fitted with a Warner-Bratzler shear device. The average tenderness value for each meat disc was calculated from the mean of either 4 (control samples and those marinaded in <0.05 N acetic acid) or 6 (samples marinated in >0.075 N acetic acid) measurement of peak shear force.

The remaining two meat discs from each treatment were individually honogenised and made up to 100 ml with distilled water. The pH of each solution was measured on a Phillips PW 9414 digital ion activity meter fitted with a Pye-Unicam model No.401/E7 combination glass electrode. Titratable acidity was determined on a 25 ml aliquot of each solution against 0.01 N or 0.1 N NaOH using a phenol phthalein indicator. Total nitrogen was determined on a 10 ml aliquot of the solution by the Kjeldahl method as described by the A.O.A.C. (1980) but incorporating a selenium, rather than mercury-based, catalyst. All marinading solutions were assessed for total nitrogen (25 ml aliquot), titratable acidity (5 ml aliquot) and pH by the methods described above.

Values obtained for titratable acidity were used to calculate the concentration (N) and total weight (g) of acetic acid in the fresh and used marinades, and the total weight of acetic acid in the marinaded meat. The weight of acetic acid was also calculated as a percentage of the used marinade volume and the marinaded meat weight. Values obtained from the nitrogen analyses were used to calculate the percentage total nitrogen content of the raw meat discs present in the used marinades.

Analyses of variance were computed to examine the differences between marinading treatments for each parameter measured. The results shown in Table 1 summarize the effect of each marinading treatment on meat swelling (or shrinkage) before and after cooking, and on its tenderness after cooking. Also included in Table 1 are the mean pH values obtained from homogenates of the uncooked marinaded meat discs.

It is clear that acetic acid concentration had a profound effect on the swelling characteristics of meat discs marinaded under the conditions used in this study. In the uncoooked state, control samples and those marinaded in 0.01 N acetic acid showed a slight weight loss. However, there was a marked increase in the weight of meat discs with increasing marinade strength, the maximum swelling achieved in 1.00 N acetic acid corresponding to slightly more than a 100 percent increase in weight. It is also interesting to note that more than an 80 percent weight increase was achieved in meat discs marinaded in acetic acid solutions covering the range 0.25 N to 3.00 N.

TABLE 1 - The influence of acetic acid concentration on the swelling characteristics, tenderness, and pH of marinaded discs of beef *M.longissimus lumborum* muscle (†8 or ‡16 observations per mean)

| | Acetic acid concentration (N) of fresh marinades | | | | | | | | | | | | | | |
|---|---|---|---|---|---|---|---|---|---|---|---|---|---|---|---|
| | Cont | 0.01 | .025 | 0.05 | .075 | 0.10 | 0.25 | 0.50 | 0.75 | 1.00 | 1.25 | 1.50 | 2.00 | 3.00 | SEM* |
| ‡RMS | 0.94 | 0.97 | 1.18 | 1.38 | 1.52 | 1.57 | 1.80 | 1.92 | 1.95 | 2.04 | 2.01 | 1.97 | 1.92 | 1.81 | .032 |
| †CMS | 0.59 | 0.50 | 0.64 | 1.01 | 1.22 | 1.34 | 1.58 | 1.74 | 1.76 | 1.84 | 1.83 | 1.84 | 1.76 | 1.74 | .030 |
| †CMT | 6.53 | 6.62 | 5.44 | 2.66 | 1.40 | 0.96 | 0.72 | 0.45 | 0.39 | 0.30 | 0.33 | 0.32 | 0.32 | 0.36 | .348 |
| ‡pH | 5.33 | 4.61 | 4.43 | 4.31 | 4.19 | 4.12 | 3.84 | 3.65 | 3.50 | 3.44 | 3.34 | 3.29 | 3.22 | 3.15 | .017 |

NOTE: RMS = raw meat swelling: CMS = cooked meat swelling: CMT = cooked meat tenderness (Kg $cm^{-2}$) * effective standard error of the means.

Cooking resulted in a loss of weight from all the marinaded meat discs, with extensive shrinkage in the control samples and those marinaded in 0.01 N and 0.025 N acetic acid solutions. However, swelling was substantially retained after cooking in the remaining samples, weight loss progressively diminishing with an increase in marinade strength. Consequently it is clear that the structural integrity of the meat discs was maintained throughout the concentration range studied, and during cooking.

The influence of marinading on meat tenderness was quite remarkable, a six-fold increase occurring over the relatively narrow concentration range 0.01 N to 0.10 N acetic acid. There was a further three-fold increase in tenderness with increasing marinade strength, the maximum benefit being achieved with 1.00 N acetic acid. However, as the marinade strength increased to 3.0 N acetic acid, there was little further change in tenderness.

It can, therefore, be clearly seen that tenderness is strongly related to the swelling characteristics of the meat and that the maximum swelling and tenderizing benefits of marinading were achieved when the pH of the meat discs had fallen to pH 3.44.

Table 2 summarises those aspects of the marinading conditions of relevance to the extent of penetration of acetic acid into the meat, its distribution between marinading solution and the meat, and the influence such conditions have on the loss of nitrogenous components from the meat discs by leaching and/or solubilization.

A comparison of the acetic acid normalities of the used and fresh marinades indicates that the apparent acetic acid content of the weakest marinades had increased markedly during marinading. An equilibrium situation was reached with the 0.05 N acetic acid marinade, beyond which there was a gradual decrease in the normality of the used compared to the fresh marinades. This comparative decrease reached a limit of approximately 12 percent at an acetic acid concentration of 0.25 N in the fresh marinade, beyond which there was little further change. A similar trend is mirrored if the percentage acetic acid contents of the fresh and used marinades are compared. Such a trend would suggest that approximately 12 percent maximum absorption of acetic acid by the meat discs occurred under the conditions used in this study. However, calculations based on normality are inappropriate in this context because of the large volume decrease of the stronger marinades due to meat swelling.

Consequently, acetic acid content is also expressed in absolute terms to give a more accurate account of its distribution due to marinading. By adding the acetic acid content of the used marinade to that of the marinaded meat, it becomes clear that over the concentration range 0.01 N to 0.10 N, the acetic acid balance consistently exceeds that of the corresponding fresh marinade by a value of approximately 0.06 g which is virtually identical to the apparent acetic acid content of the control samples. It is also clear that the distribution of acetic acid between the used marinades and the marinaded meat increased markedly with increasing marinade strength over the range studied. This is indicative of the proportionately greater apparent absorption of available acetic acid by the meat discs with decreasing marinade strength. This trend is more clearly seen by comparing the percentage acetic acid contents of the marinaded meat discs with those of the used marinades. Here, the distribution balance is reached in the 0.50 N acetic acid marinade, beyond which the balance progressively increases in favour of the used marinades.

The remaining results in Table 2 indicate that the pH of the used marinades fell gradually from pH 4.41 to pH 2.71 over the range studied. More than 20 percent of the nitrogen content of the meat discs was found in those marinades covering the range 0.01 N to 0.50 N acetic acid, reaching a maximum of 24 percent in the 0.075 N acetic acid marinade. Nevertheless, there was a progressive decrease in the loss of nitrogen from the meat with increasing marinade strength, reaching a minimum of 16.0 percent with the 3.0 N acetic acid marinade.

TABLE 2 - The influence of marinading conditions on the chemical characteristics of used marinade solutions, nitrogen solubility and acetic acid distribution* between meat and marinade (†8 or ‡16 observations per mean)

| | Acetic acid concentration (N) of fresh marinades | | | | | | | | | | | | | | |
|---|---|---|---|---|---|---|---|---|---|---|---|---|---|---|---|
| | Cont | 0.01 | .025 | 0.05 | .075 | 0.10 | 0.25 | 0.50 | 0.75 | 1.00 | 1.25 | 1.50 | 2.00 | 3.00 | SEM** |
| ‡$N^u$ | - | .018 | 0.03 | 0.05 | 0.07 | 0.09 | 0.22 | 0.44 | 0.65 | 0.87 | 1.10 | 1.32 | 1.73 | 2.60 | .009 |
| ‡$pH^u$ | - | 4.41 | 4.22 | 3.99 | 3.90 | 3.80 | 3.53 | 3.29 | 3.16 | 3.06 | 2.97 | 2.91 | 2.83 | 2.71 | .017 |
| ‡$\%N^u$ | - | 20.6 | 21.0 | 22.1 | 23.8 | 23.6 | 21.9 | 20.5 | 19.8 | 18.7 | 18.4 | 17.3 | 16.4 | 15.9 | .555 |
| ‡$TA^f$ | - | .030 | .075 | .150 | .225 | .300 | .750 | 1.50 | 2.25 | 3.00 | 3.75 | 4.50 | 6.00 | 9.00 | .000 |
| ‡$TA^u$ | - | .055 | .084 | .138 | .195 | .248 | .568 | 1.12 | 1.66 | 2.21 | 2.79 | 3.36 | 4.45 | 6.81 | .035 |
| †$TA^m$ | .059 | .036 | .050 | .071 | .091 | .114 | .221 | .393 | .604 | .806 | .967 | 1.12 | 1.45 | 1.97 | .029 |
| ‡$\%A^f$ | - | 0.06 | 0.15 | 0.30 | 0.45 | 0.60 | 1.50 | 3.00 | 4.50 | 6.00 | 7.50 | 9.00 | 12.0 | 18.0 | .000 |
| ‡$\%A^u$ | - | 0.11 | 0.17 | 0.29 | 0.42 | 0.55 | 1.30 | 2.62 | 3.89 | 5.24 | 6.57 | 7.89 | 10.4 | 15.6 | .055 |
| †$\%A^m$ | 0.81 | 0.48 | 0.53 | 0.67 | 0.77 | 0.92 | 1.62 | 2.60 | 3.99 | 5.11 | 6.30 | 7.48 | 9.82 | 14.1 | .085 |

Note: Superscipts f, u and m refer to fresh marinade, used marinade and marinaded meat respectively: N = normality of acetic acid: % N = percentage of the total nitrogen content of the fresh meat discs found in the used marinades: TA = total content of acetic acid (g): %A = percentage acetic acid present on a wt/wt (meat) or wt/vol (marinades) basis: * titratable acidity calculated as acetic acid in all meat samples, including controls: ** effective standard error of the means.

## EXAMPLE II

The same procedure was followed as in Example I except that the meat was taken from M.triceps brachii caput longum muscle, which, like M.longissimus lumborum, has a low collagen content, (of the order of 2.3% dry weight).

The influence of reduced pH on the meat tenderness is shown in the following Table 3.

TABLE 3 - the influence of acetic acid concentration on the swelling characteristics, tenderness, and pH of marinaded discs of beef M.triceps brachii caput longum muscle (†8 or ‡16 observations per mean)

| | | | | | Acetic Acid concentration (N) of fresh marinade | | | | | | | | | |
|---|---|---|---|---|---|---|---|---|---|---|---|---|---|---|
| | Cont. | 0.0025 | 0.005 | 0.01 | 0.025 | 0.05 | 0.075 | 0.10 | 0.25 | 0.50 | 0.75 | 1.00 | 2.00 | 3.00 | SEM* |
| ‡RMS | 0.94 | 0.89 | 0.94 | 0.97 | 1.21 | 1.46 | 1.57 | 1.62 | 1.78 | 1.87 | 1.90 | 1.88 | 1.91 | 1.77 | 0.025 |
| †CMS | 0.58 | 0.47 | 0.49 | 0.49 | 0.65 | 1.07 | 1.26 | 1.33 | 1.53 | 1.63 | 1.73 | 1.69 | 1.68 | 1.64 | 0.027 |
| †CMT | 5.71 | 8.41 | 9.12 | 6.52 | 3.99 | 1.83 | 0.98 | 0.76 | 0.70 | 0.54 | 0.42 | 0.42 | 0.40 | 0.48 | 0.269 |
| †pH | 5.53 | 5.21 | 4.75 | 4.49 | 4.36 | 4.22 | 4.11 | 4.00 | 3.76 | 3.56 | 3.45 | 3.36 | 3.13 | 3.02 | - |

NOTE: RMS = raw meat swelling: CMS = cooked meat swelling:

CMT = cooked meat tenderness (kg $cm^{-2}$) * effective standard error of the means.

This Example also shows the tenderizing effect of the invention on meat having a low collagen content. It can be readily seen that the toughness of the meat falls below pH 4.75, maximum tenderizing occurring when the pH had fallen to 3.13.

EXAMPLE III

The same procedure was followed as in Example I but this time with meat from M.intraspinatus muscle which has an exceptionally high collagen content (13.0% dry weight) characterised by visible sheets of connective tissue running along its length.

The results are shown in Table 4.

TABLE 4 - The influence of acetic acid concentration on the swelling characteristics, tenderness and pH of marinaded discs of beef M.intraspinatus muscle (†8 or ‡16 observations per mean)

| | Acetic Acid concentration (N) of fresh marinades | | | | | | | | | | | | | | |
|---|---|---|---|---|---|---|---|---|---|---|---|---|---|---|---|
| | Cont. | 0.0025 | 0.005 | 0.01 | 0.025 | 0.05 | 0.075 | 0.10 | 0.25 | 0.50 | 0.75 | 1.00 | 2.00 | 3.00 | SEM* |
| ‡RMS | 0.97 | 0.99 | 1.00 | 1.04 | 1.32 | 1.58 | 1.59 | 1.49 | 1.65 | 1.88 | 1.98 | 2.07 | 2.14 | 2.00 | 0.034 |
| †CMS | 0.64 | 0.59 | 0.55 | 0.54 | 0.73 | 1.13 | 1.22 | 1.22 | 1.41 | 1.77 | 1.75 | 1183 | 1.77 | 1.76 | 0.044 |
| †CMT | 4.31 | 7.45 | 8.17 | 7.42 | 3.55 | 1.53 | 1.10 | 0.89 | 0.44 | 0.32 | 0.22 | 0.21 | 0.23 | 0.29 | 0.176 |
| †pH | 5.79 | 5.24 | 4.90 | 4.63 | 4.39 | 4.26 | 4.12 | 4.04 | 3.77 | 3.58 | 3.43 | 3.32 | 3.13 | 3.02 | - |

NOTE: RMS = raw meat swelling: CMS = cooked meat swelling:

CMT = cooked meat tenderness (Kg $cm^{-2}$) * effective standard error of the means.

The results obtained in the Example 3 clearly show that the invention will tenderize meat having large amounts of connective tissue. Again the toughness was reduced below pH 4.90 and maximum tenderising obtained when the pH had fallen to 3.32.

The following examples illustrate that meat from cows of various ages can be tenderized by the techniques described in Example I.

EXAMPLE IV

M.Longissimus lumborum muscles were obtained from the carcase of a 10½ year old dairy cow three days after slaughter, prepared into discs of meat and marinaded with a range of acid solutions under the conditions described in Example I. After marinading, the surfaces of the meat discs were dried with paper towelling and the discs re-weighed. The pH of each meat disc was measured directly by inserting a spear combination glass electrode, fitted to a digital ion activity meter, into the centre of each meat disc. Each meat disc was then individually cooked in a sealed polythene bag in a water bath at 80 °C for 20 min. and thereafter immediately chilled in an ice-water bath. The meat discs were then surface dried as before and reweighed. Cores of meat were prepared from each meat disc for tenderness assessment as outlined in Example I.

The results are presented in Table 5 and show that meat from a very old cow can be tenderized in a similar manner to the meat from young steers. From a control shear force value of 11.25 Kg $cm^{-2}$ at pH 5.44, which is characteristically and unacceptably tough, the meat was made to toughen even more considerably at slightly lower pH values before beginning to tenderize. A marked increase in tenderness was achieved as the pH fell from pH 4.85 to pH 3.97, the meat remaining extremely tender at lower pH's. As shown with Example I, increasing tenderness was related to increased swelling of the meat discs which was markedly retained during cooking.

TABLE 5 - The influence of acetic acid concentration on the swelling characteristics, tenderness and pH of marinaded discs of 10½ year old cow M.longissimus lumborum muscle (16 observations per mean)

| | Control | Acetic acid concentration (N) of fresh marinades | | | | | | | | | | | | | |
|---|---|---|---|---|---|---|---|---|---|---|---|---|---|---|---|
| | | 0.0025 | 0.005 | 0.01 | 0.02 | 0.03 | 0.04 | 0.05 | 0.075 | 0.10 | 0.25 | 0.50 | 1.00 | 2.00 | 3.00 |
| RMS | 0.947 | 0.874 | 0.876 | 0.913 | 1.076 | 1.227 | 1.335 | 1.420 | 1.549 | 1.654 | 2.034 | 1.998 | 2.118 | 2.000 | 1.805 |
| CMS | 0.576 | 0.455 | 0.451 | 0.468 | 0.566 | 0.747 | 0.946 | 1.077 | 1.230 | 1.317 | 1.659 | 1.749 | 1.880 | 1.796 | 1.704 |
| CMT | 11.25 | 16.25 | 15.70 | 13.91 | 8.62 | 5.89 | 4.03 | 2.59 | 1.62 | 1.31 | 0.68 | 0.54 | 0.40 | 0.41 | 0.67 |
| pH | 5.44 | 5.33 | 5.22 | 5.11 | 4.85 | 4.70 | 4.62 | 4.52 | 4.40 | 4.31 | 3.97 | 3.73 | 3.50 | 3.23 | 3.08 |

NOTE: RMS = raw meat swelling: CMS = cooked meat swelling: CMT = cooked meat tenderness ($Kg\ cm^{-2}$):

pH = pH of uncooked meat

EXAMPLE V

M.Longissimus lumborum muscles were obtained from the carcase of a 9½ year old dairy cow three days after slaughter and subjected to the same treatments and assessment as described in Example IV.

The results are presented in Table 6 and confirm the trends found with Example IV.

TABLE 6 - The influence of acetic acid concentration on the swelling characteristics, tenderness and pH of marinaded discs of 9½ year old cow *M.longissimus lumborum* muscle (16 observations per mean)

| | Control | Acetic Acid concentration (N) of fresh marinades 0.0025 | 0.005 | 0.01 | 0.02 | 0.03 | 0.04 | 0.05 | 0.075 | 0.10 | 0.25 | 0.50 | 1.00 | 2.00 | 3.00 |
|---|---|---|---|---|---|---|---|---|---|---|---|---|---|---|---|
| RMS | 0.960 | 0.931 | 0.928 | 0.975 | 1.144 | 1.310 | 1.382 | 1.466 | 1.539 | 1.618 | 1.799 | 1.974 | 2.011 | 2.000 | 1.919 |
| CMS | 0.568 | 0.474 | 0.474 | 0.484 | 0.586 | 0.806 | 0.910 | 1.045 | 1.198 | 1.276 | 1.439 | 1.590 | 1.685 | 1.701 | 1.713 |
| CMT | 10.62 | 11.92 | 13.30 | 11.38 | 8.93 | 5.68 | 4.54 | 2.87 | 1.78 | 1.38 | 0.69 | 0.38 | 0.25 | 0.33 | 0.42 |
| pH | 5.48 | 5.42 | 5.34 | 5.13 | 4.80 | 4.70 | 4.63 | 4.56 | 4.40 | 4.30 | 3.93 | 3.67 | 3.42 | 3.13 | 2.96 |

NOTE: RMS = raw meat swelling; CMS = cooked meat swelling; CMT = cooked meat tenderness (Kg $cm^{-2}$);
pH = pH of uncooked meat

EXAMPLE VI

M.Longisiimus lumborum muscles were obtained from the carcase of a 4¾ year old dairy cow three days after slaughter and subjected to the same treatments and assessment described in Example IV. The results are presented in Table 7 and illustrate that meat from a middle-aged animal can be tenderized by subjecting it to a marinading treatment in which the pH of the meat reaches pH 4.84 or lower.

TABLE 7 - The influence of acetic acid concentration on the swelling characteristics, tenderness and pH of marinaded discs of $4^3/_4$ year old cow M.Longissimus lumborum muscle (16 observations per mean)

| | Control | Acetic acid concentration (N) of fresh marinades 0.0025 | 0.005 | 0.01 | 0.02 | 0.03 | 0.04 | 0.05 | 0.075 | 0.10 | 0.25 | 0.50 | 1.00 | 2.00 | 3.00 |
|---|---|---|---|---|---|---|---|---|---|---|---|---|---|---|---|
| RMS | 0.902 | 0.276 | 0.806 | 0.865 | 1.026 | 1.197 | 1.264 | 1.376 | 1.581 | 1.670 | 1.892 | 1.899 | 2.146 | 2.050 | 1.801 |
| CMS | 0.575 | 0.412 | 0.414 | 0.457 | 0.550 | 0.783 | 0.906 | 1.008 | 1.212 | 1.327 | 1.569 | 1.645 | 1.869 | 1.792 | 1.630 |
| CMT | 5.14 | 11.02 | 8.91 | 6.82 | 4.13 | 2.09 | 1.50 | 1.36 | 0.81 | 0.56 | 0.39 | 0.35 | 0.24 | 0.25 | 0.39 |
| pH | 5.50 | 5.41 | 5.23 | 5.12 | 4.84 | 4.74 | 4.68 | 4.64 | 4.41 | 4.32 | 3.97 | 3.66 | 3.42 | 3.16 | 2.99 |

NOTE: RMS = raw meat swelling: CMS = cooked meat swelling: CMT = cooked meat tenderness (Kg $cm^{-2}$):

pH = pH of uncooked meat

The following examples illustrate the effect of different cooking time and temperature combinations on the tenderness of beef muscles marinaded in acetic acid solutions of different strength.

EXAMPLE VII

M.triceps brachii muscles were obtained from the carcases of three young steers, and discs of meat prepared therefrom marinaded in 0.005 N acetic acid solutions by the methods described in Example I. After marinading, the meat discs were surface dried with paper towelling and reweighed. Each meat disc was then individually cooked in a sealed polythene bag in a water bath at one of the time-temperature combinations shown in Table 8 and immediately chilled in an ice-water bath. The meat discs were then surface dried as before and reweighed. Tenderness was assessed on each meat disc as outlined in Example I. The mean pH of each meat disc was calculated from the measurement of pH on 8 separate meat discs from the treated muscles of each animal, making 24 measurements in all. The measurements of pH were carried out as described in Example I.

The results are presented in Table 8 and illustrate that considerable toughening of the meat occurs with an increase in the temperature of cooking, maximum toughening being associated with temperatures in excess of 70 °C. In contrast, the length of time of cooking at the various temperatures had little influence on meat tenderness compared to cooking temperature. These results indicate that considerable shrinkage during high temperature cooking leads to toughening of meat marinaded to a pH of 4.76.

**TABLE 8 - The effect of time and temperature of cooking on the swelling characteristics and tenderness of discs of beef M.triceps brachii marinaded in 0.005N acetic acid (3 observations per mean)**

| TIME (Min) | | TEMPERATURE (°C) 20°C | 40°C | 70°C | 80°C | 90°C |
|---|---|---|---|---|---|---|
| 0 | CMS | 0.86 | 0.77 | 0.57 | 0.52 | 0.52 |
| | CMT | 3.41 | 3.25 | 6.99 | 7.85 | 8.95 |
| 20 | CMS | 0.86 | 0.77 | 0.50 | 0.49 | 0.46 |
| | CMT | 2.58 | 4.64 | 7.92 | 9.73 | 9.27 |
| 40 | CMS | 0.87 | 0.80 | 0.54 | 0.45 | 0.44 |
| | CMT | 2.27 | 3.28 | 8.53 | 9.80 | 9.67 |
| 60 | CMS | 0.85 | 0.77 | 0.51 | 0.45 | 0.45 |
| | CMT | 3.13 | 4.05 | 7.85 | 9.60 | 9.31 |

NOTE: overall mean raw meat swelling = 0.89: overall mean raw meat pH = 4.76: CMS = cooked meat swelling: CMT = cooked meat tenderness ($Kg\ cm^{-2}$)

EXAMPLE VIII

M.triceps brachii muscles from the carcases used in Example 5 were prepared into discs of meat and marinaded in 0.025 N acetic acid solutions by the methods described in Example I. The meat discs were subjected to the same treatments and assessments outlined in Example VII. The results presented in Table 9 illustrate that a slight toughening of the meat occurred at cooking temperatures of 70 °C and above. In contrast, the length of time of cooking at the various temperatures had little influence on meat tenderness. The decreased tenderness observed at the higher temperatures was related to shrinkage of the meat on cooking. However, at pH 4.43, the shrinkage on cooking was much less than that observed in Example VII indicating the beneficial influence of decreasing pH on cooked meat tenderness.

**TABLE 9 - The effect of time and temperature of cooking on the swelling characteristics and tenderness of discs of beef *M.triceps brachii* marinaded in 0.025 N acetic acid (3 observations per mean)**

| TIME (min) | | TEMPERATURE (°C) 20°C | 40°C | 70°C | 80°C | 90°C |
|---|---|---|---|---|---|---|
| 0 | CMS | 1.11 | 1.00 | 0.74 | 0.72 | 0.70 |
| | CMT | 2.19 | 2.99 | 3.58 | 3.91 | 3.61 |
| 20 | CMS | 1.11 | 1.05 | 0.72 | 0.65 | 0.56 |
| | CMT | 2.01 | 2.31 | 3.35 | 4.87 | 4.63 |
| 40 | CMS | 1.12 | 1.02 | 0.72 | 0.57 | 0.56 |
| | CMT | 1.97 | 3.27 | 3.16 | 5.37 | 4.84 |
| 60 | CMS | 1.08 | 1.02 | 0.66 | 0.63 | 0.55 |
| | CMT | 2.41 | 2.38 | 3.91 | 3.73 | 3.82 |

NOTE: overall mean raw meat swelling = 1.16: overall mean raw meat pH = 4.43: CMS = cooked meat swelling: CMT = cooked meat tenderness (Kg $cm^{-2}$)

EXAMPLE IX

The same procedure was followed as in Example VII except that the meat discs were marinaded in 0.075N acetic acid solutions. The results are presented in Table 10. Compared to the results of Examples VII and VIII and regardless of the temperature or time of cooking, the meat discs with a mean pH of 4.27 were more tender than the raw untreated meat from which they were prepared. It is clear that this extensive degree of tenderness was related to the increased water content of these meat discs which was substantially retained on cooking. However, the decrease in cooked meat swelling observed on prolonged cooking at 90 °C coupled with the decrease in tenderness would suggest that the conversion of collagen to gelatin may be proceeding under these conditions. Ultimately, the texture of the cooked meat under more adverse conditions of high temperature and lower pH would change from that of a heat denatured protein gel to that of a thickened or viscous fluid.

TABLE 10 - The effect of time and temperature of cooking on the swelling characteristics and tenderness of discs of beef M.triceps brachii marinaded in 0.075 N acetic acid (3 observations per mean)

| TIME (min) | | TEMPERATURE (°C) 20°C | 40°C | 70°C | 80°C | 90°C |
|---|---|---|---|---|---|---|
| 0 | CMS | 1.50 | 1.54 | 1.41 | 1.30 | 1.24 |
| | CMT | 1.09 | 0.88 | 1.00 | 1.34 | 1.48 |
| 20 | CMS | 1.49 | 1.47 | 1.27 | 1.14 | 1.10 |
| | CMT | 1.07 | 1.43 | 1.28 | 1.40 | 1.10 |
| 40 | CMS | 1.57 | 1.45 | 1.26 | 1.12 | 1.08 |
| | CMT | 1.18 | 1.33 | 1.07 | 1.08 | 0.74 |
| 60 | CMS | 1.51 | 1.47 | 1.23 | 1.13 | 1.07 |
| | CMT | 1.54 | 1.30 | 1.03 | 1.11 | 0.76 |

NOTE: overall mean raw meat swelling = 1.51: overall mean raw meat pH = 4.27: CMS = cooked meat swelling: CMT = cooked meat tenderness (Kg $cm^{-2}$)

The following examples illustrate the tenderizing effects of a range of food grade acids on meat from a 10½ year old dairy cow which had been stored at -25° C for ten weeks prior to thawing and marinading.

EXAMPLE X

Using samples of M.longissimus dorsi from the same carcase utilised in ExampleII, discs of meat were prepared and marinaded with a range of succinic acid solutions following similar procedures to those outlined in Example I. Marinaded meat discs were then assessed by the methods described under Example IV. The results are presented in Table 11 and illustrate that succinic acid can be successfully used to tenderize meat from an old animal in a similar manner to that achieved with acetic acid marinades described in Example IV.

Table 11 - The influence of succinic acid concentration on the swelling characteristics, tenderness and pH of marinaded discs of beef M.longissimus dorsi muscle from a 10½ year old dairy cow (4 observations per mean)

| | Succinic acid concentration (N) of fresh marinades | | | | | |
|---|---|---|---|---|---|---|
| | Control | 0.01 | 0.025 | 0.05 | 0.10 | 0.50 |
| RMS | 0.91 | 0.89 | 1.16 | 1.44 | 1.81 | 2.44 |
| CMS | 0.55 | 0.45 | 0.58 | 0.95 | 1.19 | 1.82 |
| CMT | 8.90 | 13.86 | 8.35 | 1.83 | 0.86 | 0.22 |
| pH | 5.35 | 4.97 | 4.69 | 4.42 | 4.11 | 3.32 |

EXAMPLE XI

Samples of M.longissimus dorsi muscle from the same source described in Example X were subjected to similar treatments and assessment but using o-phosphoric acid solutions as marinades rather than succinic acid. The results are presented in Table 12 and indicate that o-phosphoric acid can be successfully used to tenderize meat from an old animal by the same principles described in Example IV. Since o-phosphoric acid is a much stronger acid than either acetic or succinic acids, the amount of acid required to achieve a similar degree of tenderness is much less than would be required for these weak organic acids.

Table 12 - The influence of o-phosphoric acid concentration on the swelling characteristics, tenderness and pH of marinaded discs of beef *M.longissimus dorsi* muscle from a 10½ year old dairy cow (4 observations per mean)

| | o-phosphoric acid concentration (N) of fresh marinades | | | | | |
|---|---|---|---|---|---|---|
| | Control | 0.01 | 0.025 | 0.05 | 0.10 | 0.50 |
| RMS | 0.91 | 0.94 | 1.33 | 1.59 | 2.15 | 2.44 |
| CMS | 0.55 | 0.46 | 0.73 | 1.08 | 1.50 | 1.82 |
| CMT | 8.90 | 13.03 | 3.87 | 1.00 | 0.28 | 0.14 |
| pH | 5.35 | 5.10 | 4.64 | 4.22 | 3.05 | 1.51 |

EXAMPLE XII

The influence of tartaric acid, one of the strongest organic acids available for food use, on the tenderness of old cow beef is presented in Table 13. The muscle samples utilised in this example were from the same source and subjected to similar treatments and assessment as described in Examples X and XI. The results indicate that tartaric acid is as successful as o-phosphoric acid in tenderizing meat from an old animal and by the same principles described in Example IV.

Table 13 - The influence of tartaric acid concentration on the swelling characteristics, tenderness and pH of marinaded discs of beef M.longissimus dorsi muscle from a 10½ year old dairy cow (4 observations per mean).

| | Tartaric acid concentration (N) of fresh marinades | | | | | |
|---|---|---|---|---|---|---|
| | Control | 0.01 | 0.025 | 0.05 | 0.10 | 0.50 |
| RMS | 0.91 | 0.98 | 1.39 | 1.98 | 2.23 | 2.36 |
| CMS | 0.55 | 0.48 | 0.70 | 1.26 | 1.98 | 1.86 |
| CMT | 8.90 | 14.02 | 4.17 | 0.99 | 0.33 | 0.15 |
| pH | 5.35 | 5.03 | 4.45 | 3.75 | 3.23 | 2.92 |

The following examples illustrate the tenderizing effects of other commonly used food grade acids on meat from a 9½ year old dairy cow which had been stored at -25°C for three weeks prior to thawing and marinading.

EXAMPLE XIII

Using samples of M.longissimus dorsi from the same carcase utilised in Example V, discs of meat were prepared and marinaded with a range of citric acid solutions following similar procedures to those described in Example I. Marinaded meat discs were then assessed by the methods described in Example IV. The results are presented in Table 14 and illustrate that citric acid can be successfully used to tenderize meat from an old animal in a similar manner to that achieved with acetic acid marinades described in Example V.

Table 14 - The influence of citric acid concentration on the swelling characteristics, tenderness and pH of marinaded discs of beef M.longissimus dorsi muscle from a 9½ year old dairy cow (4 observations per mean)

| | Citric acid concentration (N) of fresh marinades | | | | | |
|---|---|---|---|---|---|---|
| | Control | 0.01 | 0.025 | 0.05 | 0.10 | 0.50 |
| RMS | 0.92 | 0.84 | 1.06 | 1.43 | 1.72 | 2.05 |
| CMS | 0.56 | 0.43 | 0.47 | 0.71 | 1.01 | 1.72 |
| CMT | 5.03 | 11.76 | 8.62 | 2.12 | 1.41 | 0.22 |
| pH | 5.46 | 5.22 | 4.94 | 4.29 | 3.91 | 2.67 |

EXAMPLE XIV

Samples of M.longissimus dorsi muscle from the same source described in Example XIII were subjected to similar treatments and assessment, but using malic acid solutions as marinades rather than succinic acid. The results are presented in Table 15 and indicate that malic acid can be successfully used to tenderize meat from any old animal by the same principles described in Example IV.

Table 15 - The influence of malic acid concentration on the swelling characteristics, tenderness and pH of marinaded discs of beef *M.longissimus dorsi* muscle from a 9½ year old dairy cow (4 observations per mean).

| | Malic acid concentration (N) of fresh marinades | | | | | |
|---|---|---|---|---|---|---|
| | Control | 0.01 | 0.025 | 0.05 | 0.10 | 0.50 |
| RMS | 0.92 | 0.97 | 1.30 | 1.53 | 1.73 | 2.08 |
| CMS | 0.56 | 0.45 | 0.69 | 0.99 | 1.28 | 1.56 |
| CMT | 5.03 | 8.99 | 2.96 | 1.18 | 0.76 | 0.19 |
| pH | 5.46 | 5.08 | 4.57 | 4.17 | 3.78 | 2.73 |

EXAMPLE XV

The influence of lactic acid, found naturally as a product of post-mortem glycolysis in meat, on the tenderness of old cow beef is presented in Table 16. The muscle samples utilised in this example were from the same source and subjected to similar treatments and assessment described for Example XIII and XIV. The results clearly indicate that lactic acid can be successfully used to tenderize meat from an old animal and by the same principles described in Example IV.

Table 16 - The influence of lactic acid on the swelling characteristics, tenderness and pH of marinaded discs of beef *M.longissimus dorsi* muscle from a 9½ year old dairy cow (4 observations per mean)

| | Lactic acid concentration (N) of fresh marinades | | | | | |
|---|---|---|---|---|---|---|
| | Control | 0.01 | 0.025 | 0.05 | 0.10 | 0.50 |
| RMS | 0.92 | 1.12 | 1.42 | 1.57 | 1.89 | 2.04 |
| CMS | 0.56 | 0.50 | 0.87 | 1.43 | 1.45 | 1.85 |
| CMT | 5.03 | 8.00 | 1.19 | 0.46 | 0.32 | 0.23 |
| pH | 5.46 | 5.00 | 4.44 | 3.95 | 3.54 | 2.65 |

## Claims

1. A method of tenderizing meat without the necessity of knowing the type of meat, comprising contacting the meat with a non-toxic acid without the inhibition of tenderisation by the addition of sodium chloride, at least until the pH of the meat is reduced below the iso-electric point of the myofibrillar proteins and until the increase in weight of the meat represented by the ratio

$$\frac{\text{weight of treated lean meat}}{\text{weight of untreated lean meat}}$$

is above 1.10

2. A method as claimed in Claim 1, wherein the pH of the meat is reduced to below 5.0

3. A method as claimed in Claim 2, wherein the pH is reduced to from 4.8 to 3.0.

4. A method as claimed in Claim 3, wherein the pH is reduced to from 4.8 to 4.0.

5. A method as claimed in any preceding claim, wherein the acid is an organic acid.

6. A method as claimed in Claim 5, wherein the acid is acetic acid, citric acid, tartaric acid, succinic acid, malic acid, lactic acid, fumaric acid, adipic acid, nicotinic acid, asorbic acid, propionic acid, benzoic acid or a mixture thereof.

7. A method as claimed in any preceding claim, wherein the acid is an inorganic acid.

8. A method as claimed in Claim 7, wherein the acid is orthophosphoric acid, hydrochloric acid, sulphuric acid or a mixture thereof.

9. A method as claimed in any preceding claim wherein the acid is a mixture of organic and inorganic acids.

10. A method as claimed in any preceding claim, wherein the temperature is maintained at above freezing point to 40 °C.

11. A method as claimed in Claim 10, wherein the temperature of the acid is maintained at above freezing point to 10 °C.

12. A method as claimed in any preceding claim, wherein the increase in weight of the meat represented by the ratio

$$\frac{\text{weight of treated cooked lean meat}}{\text{weight of uncooked untreated lean meat}}$$

is above 0.65.

13. A method as claimed in any of Claims 1 to 11, wherein the increase in weight of the meat represented by the ratio

$$\frac{\text{weight of treated freeze dried meat}}{\text{weight of untreated freeze dried meat}}$$

is above 1.0.

14. Meat tenderized obtainable by the method as claimed in any preceding claim.

**Revendications**

1. Procédé d'attendrissement de la viande ne nécessitant pas de connaître le type de viande, consistant à mettre la viande en contact avec un acide non toxique, sans inhibition de l'attendrissement par addition de chlorure de sodium, au moins jusqu'à ce que le pH de la viande soit abaissé au-dessous du point isoélectrique des protéines myofibrillaires et jusqu'à ce que l'accroissement de poids de la viande représenté par le rapport

$$\frac{\text{poids de viande maigre traitée}}{\text{poids de viande maigre non traitée}}$$

soit supérieur à 1,10.

2. Procédé selon la revendication 1, dans lequel le pH de la viande est abaissé au-dessous de 5,0.

3. Procédé selon la revendication 2, dans lequel le pH est abaissé jusqu'à 4,8 à 3,0.

4. Procédé selon la revendication 3, dans lequel le pH est abaissé jusqu'à 4,8 à 4,0.

5. Procédé selon l'une quelconque des revendications précédentes, dans lequel l'acide est un acide organique.

6. Procédé selon la revendication 5, dans lequel l'acide est l'acide acétique, l'acide citrique, l'acide tartrique, l'acide succinique, l'acide malique, l'acide lactique, l'acide fumarique, l'acide adipique, l'acide nicotinique, l'acide ascorbique, l'acide propionique, l'acide benzoïque ou un mélange d'entre eux.

7. Procédé selon l'une quelconque des revendications précédentes, dans lequel l'acide est un acide minéral.

8. Procédé selon la revendication 7, dans lequel l'acide est l'acide orthophosphorique, l'acide chlorhydrique, l'acide sulfurique, ou un mélange d'entre eux.

9. Procédé selon l'une quelconque des revendications précédentes, dans lequel l'acide est un mélange d'acide organique et d'acide minéral.

10. Procédé selon l'une quelconque des revendications précédentes, dans lequel la température est maintenue entre une température supérieure au point de congélation et 40 °C.

11. Procédé selon la revendication 10, dans lequel la température de l'acide est maintenue entre une température supérieure au point de congélation et 10 °C.

12. Procédé selon l'une quelconque des revendications précédentes, dans lequel l'accroissement de poids de la viande représenté par le rapport

$$\frac{\text{poids de viande maigre cuite traitée}}{\text{poids de viande maigre non cuite non traitée}}$$

est supérieur à 0,65.

13. Procédé selon l'une quelconque des revendications 1 à 11, dans lequel l'accroissement de poids de la viande représenté par le rapport

$$\frac{\text{poids de viande lyophilisée traitée}}{\text{poids de viande lyophilisée non traitée}}$$

est supérieur à 1,0.

14. Viande attendrie pouvant être obtenue par le procédé selon l'une quelconque des revendications précédentes.

## Patentansprüche

1. Verfahren zum Zartmachen von Fleisch ohne das Erfordernis, die Art des Fleisches zu kennen, bestehend aus dem In-Berührung-Bringen des Fleisches mit einer ungiftigen Säure, ohne Hemmung des Zartmachens durch Zugabe von Natriumchlorid, zumindest bis der pH-Wert des Fleisches unter den isoelektrischen Punkt der muskelfibrillären Proteine reduziert ist, und bis die durch das Verhältnis

$$\frac{\text{Gewicht von behandeltem magerem Fleisch}}{\text{Gewicht von unbehandeltem magerem Fleisch}}$$

dargestellte Gewichtszunahme über 1,10 beträgt.

2. Verfahren nach Anspruch 1, bei dem der pH-Wert des Fleisches auf unter 5,0 reduziert wird.

3. Verfahren nach Anspruch 2, bei dem der pH-Wert auf 4,8 bis 3,0 reduziert wird.

4. Verfahren nach Anspruch 3, bei dem der pH-Wert auf 4,8 bis 4,0 reduziert wird.

5. Verfahren nach einem der vorhergehenden Ansprüche, bei dem die Säure eine organische Säure ist.

6. Verfahren nach Anspruch 5, bei dem die Säure eine Essigsäure, Zitronensäure, Weinsäure, Subzinylsäure, Apfelsäure, Milchsäure, Fumarsäure, Adipinsäure, Nikotinsäure, Ascorbinsäure, Propionsäure, Benzoesäure oder eine Mischung davon ist.

7. Verfahren nach einem der vorhergehenden Ansprüche, bei dem die Säure eine anorganische Säure ist.

8. Verfahren nach Anspruch 7, bei dem die Säure eine Orthophosphorsäure, Salzsäure, Schwefelsäure oder eine Mischung davon ist.

9. Verfahren nach einem der vorhergehenden Ansprüche, bei dem die Säure eine Mischung aus organischer und anorganischer Säure ist.

10. Verfahren nach einem der vorhergehenden Ansprüche, bei dem die Temperatur auf über dem Gefrierpunkt bis 40 °C gehalten wird.

11. Verfahren nach Anspruch 10, bei dem die Temperatur der Säure auf über dem Gefrierpunkt bis 10 °C gehalten wird.

12. Verfahren nach einem der vorhergehenden Ansprüche, bei dem die durch das Verhältnis

$$\frac{\text{Gewicht von behandeltem gegartem magerem Fleisch}}{\text{Gewicht von unbehandeltem gegartem magerem Fleisch}}$$

dargestellte Gewichtszunahme des Fleisches über 0,65 beträgt.

13. Verfahren nach einem der Ansprüche 1 bis 11, bei dem die durch das Verhältnis

$$\frac{\text{Gewicht von behandeltem gefriergetrocknetem Fleisch}}{\text{Gewicht von unbehandeltem gefriergetrocknetem Fleisch}}$$

dargestellte Gewichtszunahme des Fleisches über 1,0 beträgt.

**14.** Fleisch, welches durch das Verfahren nach einem der vorhergehenden Ansprüche zartgemacht ist.